# EUROPÄISCHE PATENTSCHRIFT

(11) **EP 3 882 501 B1**
(45) Veröffentlichungstag und Bekanntmachung des Hinweises auf die Patenterteilung: **17.07.2024**
(21) Anmeldenummer: 20164655.1
(22) Anmeldetag: 20.03.2020
(51) Int. Cl.: F16L 5/10, B28B 23/00, E03F 1/00, E04G 15/06, F16K 27/02

(54) **DICHTHÜLSE ZUM EINGIESSEN IN EIN WAND- ODER BODENELEMENT**
SEALING SLEEVE FOR POURING INTO A WALL OR FLOOR ELEMENT
MANCHON D'ÉTANCHÉITÉ PERMETTANT DE COULER DANS UN ÉLÉMENT DE MUR OU DE SOL

(43) Veröffentlichungstag der Anmeldung: 22.09.2021
(73) Patentinhaber: Hauff-Technik GmbH & Co. KG, 89568 Hermaringen (DE)
(72) Erfinder: KURZ, Ralf, 89537 Giengen (DE)
(74) Vertreter: König Szynka Tilmann von Renesse Patentanwälte Partnerschaft mbB München

(56) Entgegenhaltungen:
- DE-B3- 102013 210 798
- DE-U1- 202011 050 243
- US-A- 5 711 536
- US-A1- 2006 049 627
- US-A1- 2006 208 480

## Beschreibung

Die vorliegende Erfindung betrifft die Verwendung einer Dichthülse zum Eingießen in ein Wand- oder Bodenelement.

Wie nachstehend im Einzelnen erläutert, kann das Eingießen insbesondere im Zuge der Herstellung des Wand- oder Bodenelements erfolgen, wenn dieses also bspw. aus Beton gegossen wird. Die Dichthülse kann dabei an einer Schalung montiert werden, anschließend ist sie baulich in das Wand- oder Bodenelement integriert. Das Vergussmaterial, typischerweise Beton, umschließt also die Dichthülse und hält sie in Position.

Aus der US 2006/049627 A1 ist eine Dichthülse bekannt, die einen Stülpabschnitt aufweist und in Flüssigbeton eingegossen wird. Nach dem Aushärten wird das Ende eines Rohres durch die Dichthülse hindurchgeschoben.

Auch aus der US 5,711,536 ist eine Dichthülse bekannt, die in Beton eingegossen wird. Sie weist einen Stülpabschnitt auf, durch den das Ende eines Rohres hindurchgeschoben wird. In einer weiteren Ausführungsform endet das Rohrende innerhalb der Dichthülse, wobei der Stülpabschnitt eingestülpt ist.

Die US 2006/0208480 A1 offenbart eine Dichthülse, welche ebenfalls in Beton eingegossen wird. Dabei ist ein Stülpabschnitt während dem Verguss durch zwei *"mandrel"* geschützt. Nach dem Aushärten werden diese *"mandrel"* entfernt, der Stülpabschnitt ausgestülpt und ein Rohrende durch den Stülpabschnitt hindurchgeschoben.

Der vorliegenden Erfindung liegt das technische Problem zugrunde, eine besonders vorteilhafte Verwendung bzw. eine Dichthülse als Gegenstand der Verwendung anzugeben.

Dies wird erfindungsgemäß mit der Verwendung gemäß Anspruch 1 gelöst. Die entsprechende Dichthülse weist einen Vergussabschnitt und einen Stülpabschnitt auf, wobei letzterer während des Eingießens in den Vergussabschnitt eingestülpt ist. In diesem eingestülpten Zustand ist die Dichthülse axial kompakt, was bspw. ein Wand- oder Bodenelement mit vergleichsweise geringer Dicke erlaubt. Nach dem Eingießen wird der Stülpabschnitt ausgestülpt, und es wird durch den ausgestülpten Stülpabschnitt ein Rohr in die Dichthülse eingeschoben.

In seiner Endposition, also im fertig eingeschobenen Zustand, ist das Rohr solchermaßen in der Dichthülse platziert, dass eines seiner beiden Enden in der Dichthülse angeordnet ist. Das fertig eingeschobene Rohr erstreckt sich dann insofern zu seinem entgegengesetzten Ende aus der Dichthülse heraus (dieses entgegengesetzte Ende ist außerhalb der Dichthülse angeordnet). In den bzw. dem ausgestülpten Stülpabschnitt kann sich das Rohr bspw. gut einschieben und/oder befestigen lassen. Der ausgestülpte Stülpabschnitt kann bspw. mit einem Spannring, etwa einer Spannschelle, auf das eingeschobene Rohr angedrückt werden.

Bevorzugte Ausgestaltungen finden sich in den abhängigen Ansprüchen und der gesamten Offenbarung. Letztere unterscheidet nicht immer im Einzelnen zwischen den verschiedenen Anspruchskategorien, sondern betrifft stets sowohl Verfahrens- bzw. Verwendungsaspekte als auch Vorrichtungsaspekte. Wird bspw. das Eingießen der Dichthülse und Montieren des Rohres beschrieben, betrifft dies zugleich eine entsprechende Anordnung mit einer in ein Wand- oder Bodenelement eingegossenen Dichthülse, in die ein Rohr eingeschoben ist.

Der Vergussabschnitt ist jener Teil der Dichthülse, der nach dem Vergießen innerhalb des Wand- oder Bodenelements angeordnet ist. Die Dichthülse kann insbesondere solchermaßen in das Wand- oder Bodenelement eingegossen sein oder werden, dass sich der Vergussabschnitt über dessen Gesamtdicke erstreckt. Unabhängig davon legt sich das Vergussmaterial beim Eingießen bspw. an eine Au-βenwandfläche des Vergussabschnitts an. Der Stülpabschnitt ist hierbei eingestülpt, er kann z. B. an einer der Außenwandfläche radial entgegengesetzten Innenwandfläche des Vergussabschnitts anliegen. Dabei muss sich der eingestülpte Stülpabschnitt axial nicht über den gesamten Vergussabschnitt erstrecken, vergleiche auch das Ausführungsbeispiel zur Illustration. Das eingeschobene Rohr liegt dann mit einer Außenwandfläche an einer Innenwandfläche des ausgestülpten Stülpabschnitts an, vorzugsweise auch an einer Innenwandfläche des Vergussabschnitts.

In anderen Worten ist bzw. wird das Rohr in bevorzugter Gestaltung bis in den Vergussabschnitt eingeschoben, ist also das Ende des Rohres in der Endposition in dem Vergussabschnitt und damit innerhalb des Wand- oder Bodenelements angeordnet. Dies kann bspw. hinsichtlich der mechanischen Stabilität von Vorteil sein, das eingeschobene Ende wird in dem Wand- oder Bodenelement radial in Position gehalten (auch unabhängig von einer zusätzlichen Befestigung des Stülpabschnitts mit einem Spannring). Dies kann bspw. einem unbeabsichtigten Herausrutschen bzw. seitlichen Herauskippen des Rohres vorbeugen. Wenn sowohl der Stülp- als auch der Vergussabschnitt jeweils mit einer Innenwandfläche an dem Rohr anliegen, kann dies bspw. eine axial entsprechend große Dichtfläche zwischen Rohr und Dichthülse ergeben. In einem zur Axialrichtung senkrechen Schnitt betrachtet, liegt in dem Axialabschnitt, in den das Rohr eingeschoben ist, eine Innenwandfläche der Dichthülse an dem Rohr an und liegt an einer Außenwandfläche der Dichthülse das Vergussmaterial an (bspw. der Beton); da das Rohr aber nicht hindurchgeschoben ist, gibt es auch einen Axialabschnitt, in dem die Innenwandfläche nicht am Rohr anliegt.

Generell beziehen sich im Rahmen dieser Offenbarung "axial" und "radial" sowie "umlaufend", und die zugehörigen Richtungen (Axialrichtung etc.), auf eine Mittenachse der Dichthülse, die mittig in der von der Dichthülse begrenzten Durchgangsöffnung liegt. Bevorzugt ist bzw. wird die Dichthülse in ein Bodenelement eingegossen, liegt die Mittenachse also in Einbaulage vertikal. Je nach Einbaulage kann diese Mittenachse zu der bzw. den Seitenflächen des Wand- oder Bodenelements gewinkelt liegen, insbesondere rechtwinklig. "Nach innen" meint radial zu dieser Mittenachse hin, eine Innenfläche ist der Mittenachse zugewandt; "nach außen" meint radial von der Mittenachse weg, eine Außenfläche ist der Mittenachse abgewandt.

Die Dichthülse kann bspw. eine Stegdichtung aufweisen, die in dem Vergussabschnitt angeordnet ist und sich gegenüber dessen Außenwandfläche nach radial außen erhebt. Vorteilhaft ist eine zwischen den axialen Enden des Vergussabschnitts angeordnete, also zu diesen Enden jeweils beabstandete Stegdichtung, welche dann von dem Vergussmaterial umschlossen wird (was Kriechwege entlang der Außenwandfläche verlängert bzw. blockiert). "Umschließen" meint insofern, dass in einem Axialschnitt betrachtet (Schnittebene beinhaltet Mittenachse) axial beidseits der Stegdichtung Vergussmaterial angeordnet ist. In dem Axialschnitt betrachtet kann die Stegdichtung einen oder mehrere axiale Vorsprünge haben, also mit dem Vergussmaterial einen radialen Hinterschnitt bilden (was eine Fixierung bzw. Verankerung schafft).

Wie vorstehend erwähnt, kann der Stülpabschnitt verringerte axiale Bautiefen ermöglichen. Das Wand- oder Bodenelement kann in bevorzugter Ausgestaltung eine Dicke von höchstens 200 mm, 180 mm, 160 mm, 140 mm, 120 mm, 110 mm, 100 mm bzw. 90 mm haben. Mögliche Untergrenzen, die auch unabhängig von einer Obergrenze von Interesse sein können und offenbart sein sollen, können bspw. bei mindestens 50 mm, 60 mm bzw. 70 mm liegen. Im Falle des Ausführungsbeispiels liegt die Dicke bspw. bei 80 mm. Entsprechend reduzierte Dicken können bspw. wegen der Materialersparnis und bei Fertigbetonteilen auch wegen des Gewichts von Vorteil sein. Die Dicke wird senkrecht zu den einander entgegengesetzten Seitenflächen des Wand- oder Bodenelements, zwischen diesen genommen.

Generell kann zwischen dem Verguss- und dem Stülpabschnitt die radial genommene Wanddicke der Dichthülse bspw. lokal reduziert sein, was das Stülpen des Stülpabschnitts vereinfachen kann. Die Dichthülse kann zwischen dem Verguss- und dem Stülpabschnitt bspw. als Filmscharnier ausgebildet sein. Generell sind der Verguss- und der Stülpabschnitt bevorzugt einstückig miteinander ausgebildet, also nicht zerstörungsfrei voneinander trennbar. Im Allgemeinen könnten die beiden bspw. auch als Mehr-Komponenten-Spritzgussteil hergestellt werden, könnte also bspw. der Vergussabschnitt aus einem härteren Material als der Stülpabschnitt vorgesehen sein. Bevorzugt sind die beiden monolithisch miteinander, also aus demselben, unterbrechungsfrei durchgehenden Material geformt (ohne Materialgrenze dazwischen). Jedenfalls der Stülpabschnitt, bevorzugt auch der Vergussabschnitt, kann aus einem Elastomermaterial vorgesehen sein.

Das "Elastomermaterial" ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikonbasiertes Material handeln, etwa Silikonkautschuk bzw. Silikonelastomer. Das Rohrelement kann bspw. eine Shore-Härte (D) von mindestens 50 Shore, 60 Shore bzw. 70 Shore haben, mit möglichen Obergrenzen bei höchstens 85 Shore bzw. 80 Shore, jedenfalls im Falle von Kunststoff.

Erfindungsgemäß ist bzw. wird das Rohr bis zu einem Anschlag in die Dichthülse eingeschoben. Im Allgemeinen kann dazu bspw. auch an der Außenwandfläche des Rohres ein Vorsprung ausgebildet sein, der dann am axialen Ende des ausgestülpten Stülpabschnitts anliegt. Bevorzugt ist der Anschlag an der Innenwandfläche der Dichthülse ausgebildet, besonders bevorzugt in deren Vergussabschnitt. Der Anschlag kann zu den beiden axialen Enden des Vergussabschnitts bspw. jeweils um mindestens 10 %, 20 % bzw. 30 % der axialen Länge des Vergussabschnitts beabstandet sein.

Gemäß einer bevorzugten Ausführungsform ist in der Dichthülse eine Verschlussklappe angeordnet. Die Verschlussklappe kann bereits in der Dichthülse angeordnet sein, wenn diese in das Wand- oder Bodenelement eingegossen wird. Sie kann aber andererseits auch erst nachträglich eingesetzt werden, also in die bereits vergossene Dichthülse. Die Verschlussklappe kann die von der Dichthülse begrenzte Durchgangsöffnung verschließen, bspw. als Geruchs-, Ungeziefer- und/oder Schaumsperre. Die Klappe kann z. B. einstückig bzw. monolithisch in die Dichthülse eingeformt sein, es kann sich aber andererseits auch um ein gesondertes Bauteil handeln, das in die Dichthülse eingesetzt ist bzw. wird. Dieses Klappen-Bauteil kann bspw. die Klappe selbst und einen Klappenkörper aufweisen, an dem die Klappe gelagert ist. Der Klappenkörper kann eine Durchlassöffnung bilden, welche je nach Klappenstellung von der Klappe verschlossen oder freigegeben werden kann.

Zur Positionierung bzw. Halterung des Klappen-Bauteils können an der Innenwandfläche der Dichthülse bspw. Haltemittel ausgebildet sein, die das Klappen-Bauteil axial in Position halten. Das Klappen-Bauteil kann bspw. in einer umlaufenden Nut positioniert sein bzw. werden. Die Dichthülse, deren Materialeigenschaften hinsichtlich einer guten Stülpbarkeit des Stülpabschnitts gewählt sind, kann auch in dieser Hinsicht Vorteile bieten, nämlich ein gutes Einsetzen und Herausnehmen des Klappen-Bauteils (oder auch anderer Bauteile, siehe unten) erlauben, es ist bspw. auch ein Austausch des bzw. der Bauteile bei eingegossener Dichthülse möglich.

Generell kann die Klappe bevorzugt kraftbeaufschlagt in der Schließstellung gehalten sein, z. B. bei entsprechender Lagerung von einem Gegengewicht oder von einem Federelement. Im Falle der einstückigen/monolithischen Klappe kann das Federelement mit angeformt sein, oder es kann ein gesondertes Federelement, z. B. ein Federring, eingesetzt werden, das die Klappe in die Schließstellung drückt. Unabhängig von diesen Details meint das Gehaltensein in der Schließstellung, dass die entsprechende Kraft (z. B. Feder- oder Gewichtskraft) die Klappe in jener Richtung beaufschlagt, in welcher die Klappe schließt. In der entgegengesetzten Richtung wird die Klappe geöffnet, z. B. von hindurchströmendem Wasser.

Generell kann die Klappe einerseits in einer Richtung schließen, die aus der Dichthülse durch das eingeschobene Rohr herausweist (von der zweiten zur ersten Seite des Wand- oder Bodenelements, siehe unten), das System ist dann für eine Strömungsrichtung von der ersten zur zweiten Seite ausgelegt (in dieser Richtung öffnet die Klappe). Die Klappe kann aber andererseits auch in einer über das eingeschobene Rohr in die Dichthülse weisenden Richtung schließen. Sie kann insofern eine Rückstauklappe darstellen, die zu dem eingeschobenen Rohr hin öffnet und von dem eingeschobenen Rohr weg schließt. Dieses System ist für eine Strömungsrichtung von der zweiten zur ersten Seite ausgelegt. Zusätzlich zu der Rückstaufunktion kann sie, insbesondere im Falle der Kraftbeaufschlagung in der Schließstellung, bspw. auch einen Geruchs- oder Ungezieferverschluss darstellen.

Die Rückstauklappe wird von einer Strömung geöffnet, die von der zweiten Seite des Wand- oder Bodenelements, die der ersten Seite mit dem Stülpabschnitt entgegengesetzt liegt, durch die Dichthülse in das eingeschobene Rohr führt. Die Dichthülsenanordnung kann insofern bspw. zur Entwässerung genutzt werden, also um von der zweiten Seite des Wand- oder Bodenelements Wasser abzuführen. Kommt es bspw. bei einer Überlastung des Rohrleitungssystems, von dem das eingeschobene Rohr ein Teil ist, zu einer Rückstausituation, schließt die Rückstauklappe und kann eine Flutung der zweiten Seite des Wand- oder Bodenelements verhindert werden.

Gemäß einer bevorzugten Ausführungsform ist in der Dichthülse ein Sieb angeordnet. Das Sieb könnte im Allgemeinen einstückig in die Dichthülse eingeformt sein, bevorzugt handelt es sich um ein Bauteil, das gesondert eingesetzt ist bzw. wird. Es wird auf die vorstehenden Anmerkungen zu einem "Bauteil" verwiesen, das Sieb kann bspw. an an der Innenwandfläche ausgebildeten Haltemitteln axial formschlüssig gehalten sein, bspw. in einer umlaufenden Nut. Ein eingesetztes Sieb lässt sich bedarfsweise entnehmen, bspw. zur Reinigungszwecken (des Siebs selbst oder des Rohrleitungssystems). In der Dichthülse können axial aufeinanderfolgend auch mehrere Siebe angeordnet sein, bspw. ein Grobsieb für Laub und ein Feinsieb für kleinere Verschmutzungen bzw. Einspülungen. Bezogen auf die vorstehend geschilderte Entwässerungsfunktion kann das Grobsieb bspw. näher an der zweiten Seitenfläche platziert sein als das Feinsieb (sodass es bei der Entwässerung zuerst durchströmt wird).

Generell ist das eingeschobene Rohr bevorzugt Teil eines Rohrleitungssystems, ist es also seinerseits mit einem weiteren Rohr zusammengesetzt (auf der ersten Seite des Wand- oder Bodenelements). Das Rohrleitungssystems kann vorzugsweise ein Abwasser-Rohrsystem sein, welches besonders bevorzugt zur Entwässerung der zweiten Seite des Wand- oder Bodenelements genutzt wird (zum Abführen von Wasser von dort). Bei einer bevorzugten Variante kann das Rohrleitungssystems insofern in der Dichthülse enden. Diese bildet dann also einen Ablauf, und das Rohrleitungssystems ist an der zweiten Seite des Wand- oder Bodenelements nicht mit einem zusätzlichen Rohr verlängert.

Bei einer alternativ bevorzugten Ausführungsform wird bzw. ist von der zweiten Seite des Wand- oder Bodenelements her jedoch ein Inspektionsrohr an die Dichthülse angesetzt. Dieses kann bspw. zumindest in einem Bereich eine jedenfalls transluzente, bevorzugt transparente Wand haben und einer Wasserstandskontrolle dienen. Das Rohrleitungssystem endet dann bevorzugt mit dem Inspektionsrohr, an dieses ist also seinerseits kein weiteres Rohr angesetzt. Die entsprechende Dichthülse kann dann bspw. ohne Rückstauklappe ausgeführt sein, sodass bei einer Rückstausituation das Wasser über die Dichthülse hinaus in dem Inspektionsrohr ansteigen kann.

Dies kann bspw. eine Wasserstandskontrolle erlauben, das Inspektionsrohr kann z. B. mit einer Skala ausgestattet sein. Die Variante bzw. Verwendung "Inspektionsrohr" kann insbesondere in einem Entwässerungssystem von Interesse sein, in dem mehrere Dichthülsen in einer vorliegend geschilderten Weise Einsatz finden, also jeweils einen Ablauf bilden und an dasselbe Rohrsystem angeschlossen sind. Ein Teil der Dichthülsen kann dann jeweils mit einer Rückstauklappe ausgestattet werden, eine oder mehrere der Dichthülsen können hingegen zu Überprüfungszwecken mit einem Inspektionsrohr versehen werden.

Gemäß einer bevorzugten Ausführungsform ist zumindest eines der beiden einander entgegengesetzten Enden der Dichthülse beim Eingießen mit einem Deckel verschlossen, bevorzugt ist in jedes der beiden Enden jeweils ein Deckel eingesetzt. Bei dem Ende mit dem Stülpabschnitt ist bzw. wird der Deckel in den eingestülpten Stülpabschnitt eingesetzt, entsprechend wird er vor dem Ausstülpen herausgenommen. Im Falle des entgegengesetzten Endes, das an der zweiten Seite des Wand- oder Bodenelements liegt, kann der Deckel nach dem Herausnehmen bspw. ein Sieb freilegen oder kann er gegen ein Sieb ausgetauscht werden. Im Allgemeinen könnte an einem oder beiden Enden jeweils auch ein einstückig, insbesondere monolithisch, mit der übrigen Dichthülse geformter Verschluss vorgesehen sein, der dann bspw. entlang einer Sollbruchstelle ausgetrennt wird. Ein separat eingesetzter Deckel kann jedoch bspw. insoweit von Vorteil sein, als er eine höhere Stabilität bieten kann. Ein eingesetzter Deckel kann aus einem im Vergleich zur Dichthülse härteren Material gefasst sein, also bspw. die Dichthülse zuverlässig verschließen (Trittschutz) oder während des Eingießens auch abstützen.

Bei einer bevorzugten Ausführungsform wird durch die Dichthülse an der zweiten Seite des Wand- oder Bodenelements anstehendes Wasser abgeführt. Dieses Wasser gelangt über die Dichthülse in das eingeschobene Rohr und damit bspw. in ein Abwasserrohrsystem. Das eingeschobene Rohr wird also als wasserführendes Rohr genutzt.

Die Erfindung betrifft auch eine Dichthülsenanordnung gemäß Anspruch 10 mit einem Wand- oder Bodenelement, in das eine Dichthülse eingegossen ist. Die Dichthülsenanordnung kann insbesondere im Zuge eines Verfahrens bzw. einer Verwendung nach einem der Ansprüche 1 bis 9 hergestellt worden sein, in den ausgestülpten Stülpabschnitt kann bspw. ein Rohr eingeschoben sein, es wird ausdrücklich auf die vorstehend offenbarten Merkmale verwiesen.

Gemäß einer bevorzugten Ausführungsform handelt es sich bei der Dichthülsenanordnung um ein Betonfertigteil, wird die Dichthülse also z. B. in einem Fertigteilwerk eingegossen und wird das Wand- oder Bodenelement mit der eingegossenen Dichthülse zur Baustelle transportiert. Mit Blick auf ein Betonfertigteil kann die Möglichkeit der Dickenreduzierung des Wand- oder Bodenelements bspw. dahingehend von Vorteil sein, dass eine mit der verringerten Dicke einhergehende Gewichtsreduktion bspw. auch den Transport- und/oder Montageaufwand reduzieren kann.

Bei dem Betonfertigteil kann es sich im Allgemeinen bspw. auch um einen Balkon- oder Terrassenelement handeln, bevorzugt ist es jedoch als Lichtschacht ausgebildet. Dieser kann bspw. im Erdreich platziert und an einer Außenwand eines Gebäudes gesetzt werden, wobei in der Gebäudewand bspw. ein Fenster im Bereich des Lichtschachts angeordnet sein kann. Die Ablauffunktion, und insbesondere die Rückstausperrung, kann bzw. können insofern von Vorteil sein, als damit einer Ansammlung von Wasser in dem Lichtschacht und damit einem Wassereintritt in das Gebäude über das Fenster vorgebeugt werden kann.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Anordnung mit einer in ein Bodenelement eingegossenen Dichthülse;
- Figur 2: die Dichthülse der Anordnung gemäß Figur 1 mit einem eingeschobenen Rohr;
- Figur 3: die Dichthülse gemäß Figur 2 in einem Axialschnitt;
- Figur 4: einen Teil der Anordnung gemäß Figur 1 in einer Explosionsdarstellung.

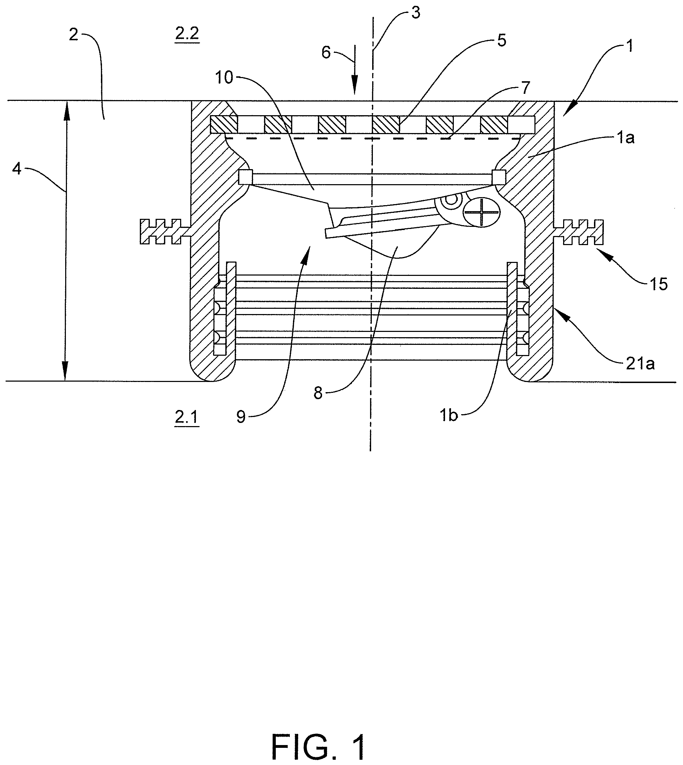

Figur 1 zeigt eine Dichthülse 1, die in ein Wand- oder Bodenelement 2 eingegossen ist, vorliegend ein Bodenelement 2 aus Beton. Gezeigt ist eine teilweise geschnittene Seitenansicht, die Schnittebene beinhaltet eine Mittenachse 3 der Dichthülse 1. Die Dichthülse 1 weist einen Vergussabschnitt 1a und einen Stülpabschnitt 1b auf, letzterer ist in Figur 1 in den Vergussabschnitt 1a eingestülpt. In dieser Konfiguration wird die Dichthülse 1 vergossen, was eine vergleichsweise geringe axiale Bautiefe erlaubt. Entsprechend hat das Bodenelement 2 vorliegend eine Dicke 4 von nur rund 80 mm.

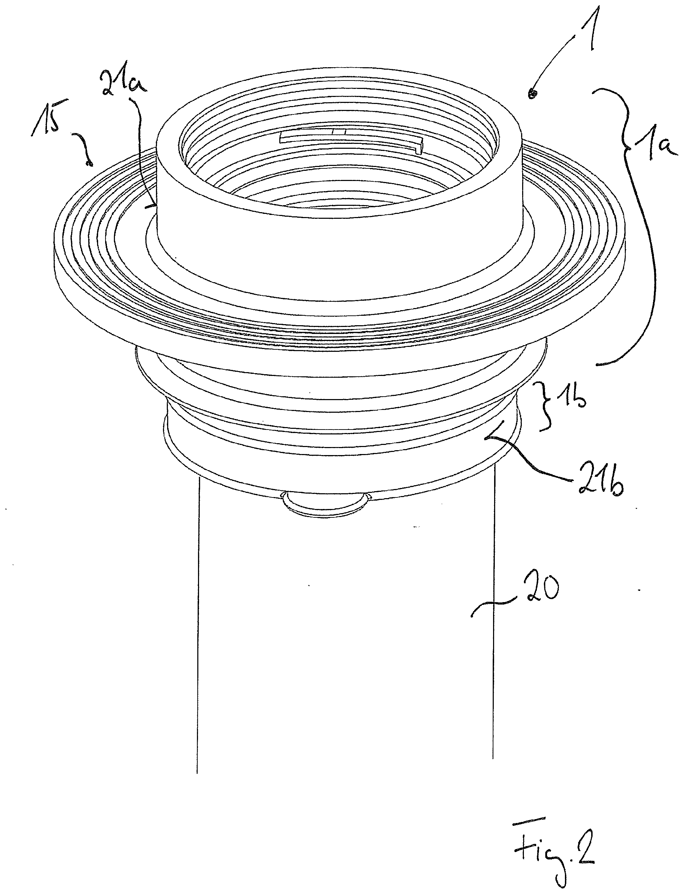

Nach dem Eingießen wird der Stülpabschnitt 1b ausgestülpt, zu einer ersten Seite 2.1 des Wand- oder Bodenelements 2 hin, vorliegend nach unten. Von der ersten Seite 2.1 her wird dann ein Rohr in die Dichthülse eingeschoben, vergleiche Figur 2 zur Illustration. Damit kann trotz der geringen axialen Bautiefe zuverlässig eine Anlage zwischen dem eingeschobenen Rohr 20 und der Dichthülse 1 geschaffen werden, das Rohr 20 ist bis in den Vergussabschnitt 1a eingeschoben. Dadurch wird es auch von dem Wand- oder Bodenelement 2 selbst stabilisiert, also radial abgestützt. Ferner ist die Außenwandfläche 21b des ausgestülpten Stülpabschnitts 1b gut zugänglich, der Stülpabschnitt kann bspw. mit einer Spannschelle (nicht dargestellt) auf das Rohr 20 angedrückt werden. Das Rohr 20 kann Teil eines Rohrsystems sein, über welches dann Wasser von der zweiten Seite 2.2 des Wand- oder Bodenelements 2 abgeführt wird.

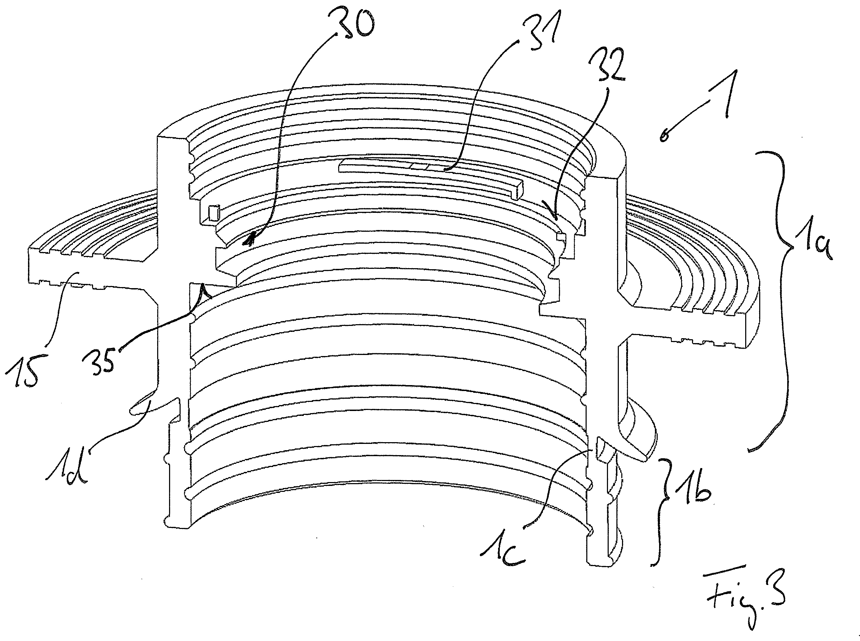

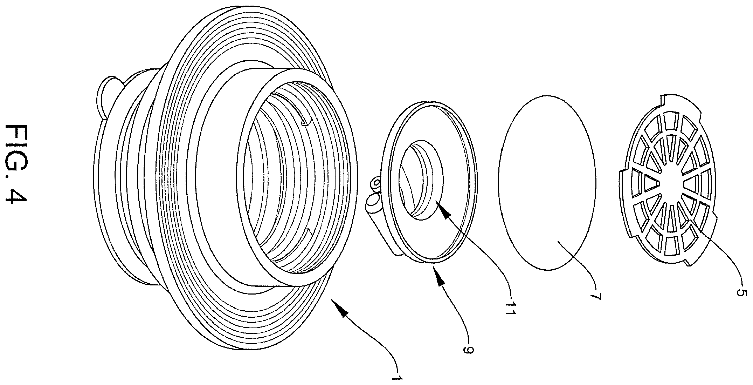

Mit Blick auf diese Entwässerungsfunktion ist in der in Figur 1 gezeigten Variante ein Grobsieb 5 in die Dichthülse 1 eingesetzt, welches als Laub- bzw. Grobschmutzfang dient. Dem Grobsieb 5 ist bezogen auf eine Entwässerungsrichtung 6 nachgelagert ein Feinsieb 7 angeordnet, welches kleinere Schmutzpartikel ausfiltern kann. Ferner ist in der Dichthülse eine Klappe 8 positioniert, die vorliegend als Rückstau-Klappe dient. Die Klappe 8 ist Teil eines Klappen-Bauelements 9, das zusätzlich einen Klappenkörper 10 aufweist. An letzterem ist die Klappe 8 bewegbar gelagert, der Klappenkörper 10 ist axial formschlüssig in der Dichthülse 1 gehalten (siehe auch Figur 3). Kommt es bspw. im Zuge eines Starkregenereignisses zu einem Rückstau in dem Rohrsystem, wenn also der Wasserstand entgegen der Entwässerungsrichtung 6 ansteigt, so wird die Klappe 8 in ihren Dichtsitz an dem Klappenkörper 10 gedrückt und damit die Durchgangsöffnung 11 im Klappenkörper 10 verschlossen (vergleiche auch Figur 4 zur Illustration).

Außenseitig ist die Dichthülse 1 mit einer angeformten Stegdichtung 15 ausgestattet, diese wird von dem Beton umschlossen und blockiert Kriechwege für Feuchtigkeit entlang der Außenwandfläche 21a des Vergussabschnitts 1a. Figur 3 illustriert die Stegdichtung 15 im Schnitt, ferner lässt sie ein zwischen dem Vergussabschnitt 1a und dem Stülpabschnitt 1b ausgebildetes Filmscharnier 1c erkennen. Dieses ist als Bereich verringerter Wandstärke realisiert, um das Filmscharnier 1c kann der Stülpabschnitt 1b ein- und ausgestülpt werden. Im Bereich des Filmscharniers 1c ist eine Dichtlippe 1d geformt, mit welcher die Dichthülse 1 beim Eingießen an der Schalung anliegt, was bspw. einem Eindringen von Betonmilch vorbeugen kann.

Der Schnitt gemäß Figur 3 illustriert ferner eine Nut 30, in der das Klappen-Bauteil 9 formschlüssig positioniert werden kann. Die in der Darstellung obere der beiden die Nut 30 begrenzenden Flanken ist angeschrägt, um das Einsetzen zu erleichtern. Ferner ist ein Gewindeabschnitt 31 zu erkennen, in dem das Grobsieb 5 mit einer Drehbewegung arretiert werden kann, einem Bajonett-Mechanismus vergleichbar. Das zwischen dem Grobsieb 5 und dem Klappen-Bauteil 9 angeordnete Feinsieb 7 kann auf einer Stufe 32 aufliegen und von dem Grobsieb 5 in diesen Sitz gedrückt werden. Das Rohr 20 kann von unten bis zu einem Anschlag 35 eingeschoben werden.

Figur 4 illustriert die einzelnen Bestandteile nochmals in einer Explosionsdarstellung, zu erkennen sind die Dichthülse 1, das Klappen-Bauteil 9, das Feinsieb 7, sowie das Grobsieb 5.

## Patentansprüche

1. Verwendung einer Dichthülse (1),
welche Dichthülse (1) einen Vergussabschnitt (1a) und einen Stülpabschnitt (1b) aufweist,
wobei die Dichthülse (1) in ein Wand- oder Bodenelement (2) eingegossen wird, wobei der
i.) Stülpabschnitt (1b) während des Eingießens der Dichthülse (1) in den Vergussabschnitt (1a) eingestülpt ist und
ii.) der Stülpabschnitt (1b) nach dem Eingießen der Dichthülse (1) ausgestülpt wird,
wobei anschließend
iii.) ein Rohr (20) in den ausgestülpten Stülpabschnitt (1b) bis zu einem Anschlag (35) in die Dichthülse (1) eingeschoben wird, und zwar bis zu einer Endposition, in welcher ein Ende des Rohres (20) in der Dichthülse (1) angeordnet ist.

2. Verwendung nach Anspruch 1, bei welcher das Ende des Rohres (20) in der Endposition in dem Vergussabschnitt (1a) der Dichthülse (1) und damit innerhalb des Wand- oder Bodenelements (2) angeordnet ist.

3. Verwendung nach Anspruch 1 oder 2, bei welcher das Wand- oder Bodenelement (2) eine Dicke (4) von höchstens 200 mm hat.

4. Verwendung nach einem der vorstehenden Ansprüche, bei welcher in der Dichthülse (1) eine Verschlussklappe (9) angeordnet ist oder wird.

5. Verwendung nach Anspruch 4, bei welcher die Verschlussklappe (9), bezogen auf das in die Dichthülse (1) eingeschobene Rohr (20), als Rückstauklappe dient, also zu dem eingeschobenen Rohr (20) hin öffnet und von dem eingeschobenen Rohr (20) weg schließt.

6. Verwendung nach einem der vorstehenden Ansprüche, bei welcher in der Dichthülse (1) ein Sieb (5, 7) angeordnet ist oder wird.

7. Verwendung nach einem der vorstehenden Ansprüche, bei welcher von einer dem Stülpabschnitt (1b) entgegengesetzten Seite (2.2) des Wand- oder Bodenelements (2) her ein Inspektionsrohr an die Dichthülse (1) angesetzt wird.

8. Verwendung nach einem der vorstehenden Ansprüche, bei welcher während des Eingießens der Dichthülse (1) zumindest eines von zwei einander entgegengesetzten Enden der Dichthülse (1) mit einem Deckel verschlossen ist.

9. Verwendung nach einem der vorstehenden Ansprüche, bei welcher Wasser von einer dem Stülpabschnitt (1b) entgegengesetzten Seite des Wand- oder Bodenelements (2) durch die Dichthülse (1) und durch das in die Dichthülse (1) eingeschobene Rohr (20) abgeführt wird.

10. Dichthülsenanordnung, insbesondere als Erzeugnis einer Verwendung nach einem der Ansprüche 1 bis 9, mit
einem Wand- oder Bodenelement (2), einer Dichthülse (1) und einem Rohr (20),
welche Dichthülse (1) einen Vergussabschnitt (1a), einen Stülpabschnitt (1b) und einen Anschlag (35) aufweist,
wobei die Dichthülse (1) solchermaßen in das Wand- oder Bodenelement (2) eingegossen ist, dass der Vergussabschnitt (1a) innerhalb des Wand- oder Bodenelements (2) angeordnet ist,
wobei der Stülpabschnitt (1b) solchermaßen stülpbar ist, dass der ausgestülpte Stülpabschnitt (1b) außerhalb des Wand- oder Bodenelements (2) angeordnet ist und der eingestülpte Stülpabschnitt (1b) innerhalb der Wand- oder Bodenelements (2) angeordnet ist,
wobei der stülpbare Stülpabschnitt (1b) ausgestülpt ist und in den ausgestülpten Stülpabschnitt (1b) das Rohr (20) bis zu dem Anschlag (35) eingeschoben ist, und zwar bis zu einer Endposition, in welcher ein Ende des Rohres (20) in der Dichthülse (1) angeordnet ist.

11. Dichthülsenanordnung nach Anspruch 10, welche ein Betonfertigteil ist.

## Claims

1. Use of a sealing sleeve (1),
which sealing sleeve (1) has a casting section (1a) and a fold section (1b), wherein the sealing sleeve (1) is molded into a wall or floor element (2), wherein the
i.) fold section (1b) is folded into the casting section (1a) during the molding of the sealing sleeve (1) and
ii.) the fold section (1b) is folded out after the molding of the sealing sleeve (1),
wherein subsequently
iii.) a pipe (20) is inserted into the folded out fold section (1b) up to a stop (35) into the sealing sleeve (1), namely up to an end position in which an end of the pipe (20) is arranged in the sealing sleeve (1).

2. Use according to claim 1, in which the end of the pipe (20) in the end position is arranged in the casting section (1a) of the sealing sleeve (1) and thus within the wall or floor element (2).

3. Use according to claim 1 or 2, in which the wall or floor element (2) has a thickness (4) of at most 200 mm.

4. Use according any of the preceding claims, in which a closing flap (9) is or will be arranged in the sealing sleeve (1).

5. Use according to claim 4, in which the closing flap (9), relative to the pipe (20) inserted into the sealing sleeve (1), serves as a backflow flap, i.e., opens towards the inserted pipe (20) and closes away from the inserted pipe (20).

6. Use according any of the preceding claims, in which a sieve (5, 7) is or will be arranged in the sealing sleeve (1).

7. Use according any of the preceding claims, in which an inspection pipe is placed against the sealing sleeve (1) from a side (2.2) of the wall or floor element (2) opposite the fold section (1b).

8. Use according any of the preceding claims, in which at least one of two opposite ends of the sealing sleeve (1) is closed with a cover during the molding of the sealing sleeve (1).

9. Use according any of the preceding claims, in which water is drained from a side of the wall or floor element (2) opposite the fold section (1b) through the sealing sleeve (1) and through the pipe (20) inserted into the sealing sleeve (1).

10. Sealing sleeve arrangement, in particular as a product of a use according to one of claims 1 to 9, having
a wall or floor element (2), a sealing sleeve (1), and a pipe (20),
which sealing sleeve (1) has a casting section (1a), a fold section (1b), and a stop (35),
wherein the sealing sleeve (1) is molded into the wall or floor element (2) such that the casting section (1a) is arranged within the wall or floor element (2),
wherein the fold section (1b) is foldable such that the folded out fold section (1b) is arranged outside the wall or floor element (2) and the folded in fold section (1b) is arranged within the wall or floor element (2),
wherein the foldable fold section (1b) is folded out and the pipe (20) is inserted into the folded out fold section (1b) up to the stop (35), namely up to an end position in which an end of the pipe (20) is arranged in the sealing sleeve (1).

11. Sealing sleeve arrangement according to claim 10, which is a precast concrete component.

## Revendications

1. Utilisation d'un manchon d'étanchéité (1),
lequel manchon d'étanchéité (1) présente une section à couler (1a) et une section rabattable (1b),
ledit manchon d'étanchéité (1) étant coulé dans un élément de mur ou de sol (2), étant entendu que
i.) la section rabattable (1b) est rabattue vers l'intérieur de la section à couler (1a) pendant le coulage du manchon d'étanchéité (1), et
ii.) la section rabattable (1b) est rabattue vers l'extérieur après le coulage du manchon d'étanchéité (1),
après quoi
iii.) un tuyau (20) est inséré dans la section rabattable (1b) rabattue vers l'extérieur, jusqu'à une butée (35) du manchon d'étanchéité (1), c'est-à-dire jusqu'à une position finale dans laquelle une extrémité du tuyau (20) est disposée dans le manchon d'étanchéité (1).

2. Utilisation selon la revendication 1, dans laquelle l'extrémité du tuyau (20) en position finale dans la section à couler (1a) du manchon d'étanchéité (1) est disposée avec celui-ci à l'intérieur de l'élément de mur ou de sol (2).

3. Utilisation selon la revendication 1 ou 2, dans laquelle l'élément de mur ou de sol (2) a une épaisseur (4) ne dépassant pas 200 mm.

4. Utilisation selon l'une des revendications précédentes, dans laquelle un clapet de fermeture (9) est ou viendra à être disposé dans le manchon d'étanchéité (1).

5. Utilisation selon la revendication 4, dans laquelle le clapet de fermeture (9) agit, vis-à-vis du tuyau (20) inséré dans le manchon d'étanchéité (1), en tant que clapet anti-retour, c'est-à-dire qu'il s'ouvre vers le tuyau (20) inséré et se referme à partir dudit tuyau (20) inséré.

6. Utilisation selon l'une des revendications précédentes, dans laquelle un treillis (5, 7) est ou viendra à être disposé dans le manchon d'étanchéité (1).

7. Utilisation selon l'une des revendications précédentes, dans laquelle un tuyau d'inspection est fixé sur le manchon d'étanchéité (1) depuis un côté (2.2) de l'élément de mur ou de sol (2) opposé à la section rabattable (1b).

8. Utilisation selon l'une des revendications précédentes, dans laquelle au moins une des deux extrémités opposées du manchon d'étanchéité (1) est fermée par un couvercle pendant le coulage du manchon d'étanchéité (1).

9. Utilisation selon l'une des revendications précédentes, dans laquelle de l'eau est évacuée à partir d'un côté de l'élément de mur ou de sol (2) opposé à la section rabattable (1b) à travers le manchon d'étanchéité (1) et à travers le tuyau (20) inséré dans ledit manchon d'étanchéité (1).

10. Agencement à manchon d'étanchéité, résultant notamment d'une utilisation selon l'une des revendications 1 à 9, comportant :
un élément de mur ou de sol (2), un manchon d'étanchéité (1) et un tuyau (20), lequel manchon d'étanchéité (1) présente une section à couler (1a), une section rabattable (1b) et une butée (35),
ledit manchon d'étanchéité (1) étant coulé dans l'élément de mur ou de sol (2) de telle façon que la section à couler (1a) est disposée à l'intérieur de l'élément de mur ou de sol (2),
ladite section rabattable (1b) pouvant être rabattue de telle façon que ladite section rabattable (1b) rabattue vers l'extérieur est disposée à l'extérieur de l'élément de mur ou de sol (2) et que ladite section rabattable (1b) rabattue vers l'intérieur est disposée à l'intérieur de l'élément de mur ou de sol (2),
ladite section rabattable (1b) étant rabattue vers l'extérieur et le tuyau (20) étant inséré jusqu'à la butée (35) dans cette section rabattable (1b) rabattue vers l'extérieur, c'est-à-dire jusqu'à une position finale dans laquelle une extrémité du tuyau (20) est disposée dans le manchon d'étanchéité (1).

11. Agencement à manchon d'étanchéité selon la revendication 10, prévue comme élément préfabriquée en béton.
